# EUROPEAN PATENT APPLICATION

(11) **EP 4 759 721 A1**
(43) Date of publication of application: **17.06.2026**
(21) Application number: 25222493.6
(22) Date of filing: 11.12.2025
(51) Int. Cl.: B64F 5/30, B08B 3/00, B08B 9/00, F01D 25/00

(54) **GAS TURBINE ENGINE CLEANING SYSTEM**

(30) Priority: 13.12.2024 PL 45055824; 03.07.2025 US 202519258967
(71) Applicant: General Electric Company, Evendale, Ohio 45215 (US); GE Aerospace Poland Sp. z o.o., 02-256 Warsaw (PL)
(72) Inventor: RAJANIKANTH, G., 560066 Bengaluru (IN); PRITCHARD, JR., Byron Andrew, Evendale, 45215 (US); MLYNSKI, Grzegorz, 02-256 Warsaw (PL); ERIKSEN, Michael Edward, Springdale, 45246 (US); RICCIARDI, Frank, West Chester, 45069 (US); GUNDRUM, Michael Joseph, Springdale, 45246 (US); SIDDAPPA, Shivakumar, 560066 Bengaluru (IN); DAUD, Adam, Dubai (AE); KULKARNI, Ambarish Jayant, Niskayuna, 12309-1027 (US); LAURIA, Keith Anthony, Niskayuna, 12309-1027 (US); GRAHAM, Andrew Crispin, Altrincham, WA14 2DT (GB); KODALI, Meenakshi, Niskayuna, 12309-1027 (US); TRIVEDI, Deepak, Niskayuna, 12309-1027 (US)
(74) Representative: Openshaw & Co.

(57) **Abstract**

A cleaning system (20) for a gas turbine engine (100) includes a foam supply unit (26) for generating cleaning foam (194) that is injected into the gas turbine engine (100), and an air blower (180) that is operably coupled to a core flowpath (121) of the gas turbine engine (100), the air blower (180) being configured to draw a flow of air (182) through the core flowpath (121) at a flow rate that induces rotation of the gas turbine engine (100) at a target rotational speed.

## Description

### CROSS-REFERENCE TO RELATED APPLIATION(S)

This application claims priority to Polish Application No. P.450558 filed December 13, 2024 and to U.S. Utility Application No. 19/258,967 filed July 3, 2025, which are incorporated herein by reference in their entirety.

### FIELD

The present subject matter relates generally to a cleaning system for a gas turbine engine, and a method for operating the same.

### BACKGROUND

Typical aircraft propulsion systems include one or more gas turbine engines. For certain propulsion systems, the gas turbine engines generally include a fan and a core arranged in flow communication with one another. Additionally, the core of the gas turbine engine generally includes, in serial flow order, a compressor section, a combustor section, a turbine section, and an exhaust section. In operation, air is provided from the fan to an inlet of the compressor section where one or more axial compressors progressively compress the air until it reaches the combustor section. Fuel is mixed with the compressed air and burned within the combustor section to provide combustion gases. The combustion gases are routed from the combustor section to the turbine section. The flow of combustion gasses through the turbine section drives the turbine section and is then routed through the exhaust section, e.g., to atmosphere.

During operation, a substantial amount of air is ingested by such gas turbine engines. However, such air may contain foreign particles. A majority of the foreign particles will follow a gas path through the engine and exit with the exhaust gases. However, at least certain of these particles may stick to certain components within the gas turbine engine's gas path, potentially changing aerodynamic properties of the engine and reducing engine performance.

In order to remove such foreign particles from within the gas path of the gas turbine engine, a cleaning operation can be performed that directs water or other fluids towards an inlet of the gas turbine engine, while the core engine is cranked using, e.g., using a starter motor. However, such cleaning operations are often not tailored to the type of cleaning actually needed in a particular portion of the engine. For example, depending on the prior operating conditions of the gas turbine engine, a quick and simple water wash may be needed. In other situations, a long wash cycle with a cleaning foam having particular foam characteristics may be needed to properly clean the engine and return it to peak efficiency.

Accordingly, a cleaning system for providing improved and customized cleaning of a gas turbine engine would be useful.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 is a perspective view of a modular foam cart that may contain certain components of an example cleaning system according to an example embodiment of the present subject matter.
FIG. 2 is a schematic view of the example cleaning system of FIG. 1 according to an example embodiment of the present subject matter.
FIG. 3 is a schematic view of a distribution manifold of the example cleaning system of FIG. 1 according to an example embodiment of the present subject matter.
FIG. 4 is a schematic view of a wash module of the example cleaning system of FIG. 1, operable with a gas turbine engine according to an example embodiment of the present subject matter.
FIG. 5 is a schematic view of an everting tube that may be used with the example cleaning system of FIG. 1 according to an example embodiment of the present subject matter.
FIG. 6 is a schematic view of the example everting tube of FIG. 5 according to an example embodiment of the present subject matter.
FIG. 7 is a schematic view of the example cleaning system of FIG. 1 according to an example embodiment of the present subject matter.
FIG. 8 is a schematic view of the example cleaning system of FIG. 1 according to an example embodiment of the present subject matter.
FIG. 9 provides a perspective view of a capture manifold of the example cleaning system of FIG. 1 connected to an exhaust manifold of a gas turbine engine according to an example embodiment of the present subject matter.
FIG. 10 provides a method of cleaning a gas turbine engine according to an example embodiment of the present subject matter.

Repeat use of reference characters in the present specification and drawings is intended to represent the same or analogous features or elements of the present invention.

### DETAILED DESCRIPTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention. As used herein, the terms "first", "second", and "third" may be used interchangeably to distinguish one component from another and are not intended to signify location or importance of the individual components. The terms "forward" and "aft" refer to relative positions within a gas turbine engine, with forward referring to a position closer to an engine inlet and aft referring to a position closer to an engine nozzle or exhaust. The terms "upstream" and "downstream" refer to the relative direction with respect to fluid flow in a fluid pathway. For example, "upstream" refers to the direction from which the fluid flows, and "downstream" refers to the direction to which the fluid flows.

As explained herein, aspects of the present subject matter are generally directed to systems and methods for turning a gas turbine engine during the cleaning process while also efficiently collecting cleaning foam injected into the engine. The engine may be turned by using an air blower to draw air and/or foam through the engine at a flow rate sufficient to induce rotation of the engine at a desired speed. In this manner, no separate turning tool or drive motor may be needed to rotate the engine, cleaning times may be reduced, etc. For example, engine preparation for a foam wash process and engine restoration time may be reduced. In addition, there is no need to prefill the accessory gear box with oil, and overfilling of the high-pressure compressor and the environmental control system is avoided. Moreover, scuffing of the gears in the accessory gearbox is eliminated or reduced altogether.

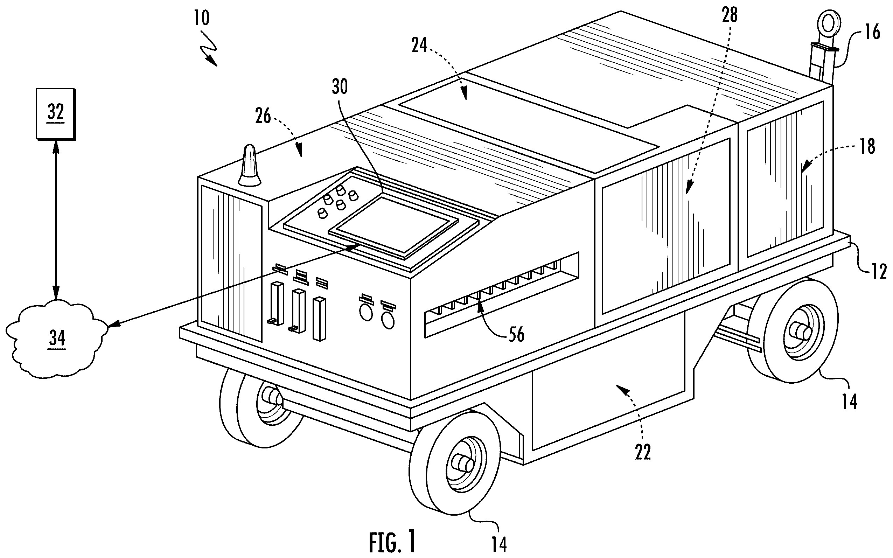

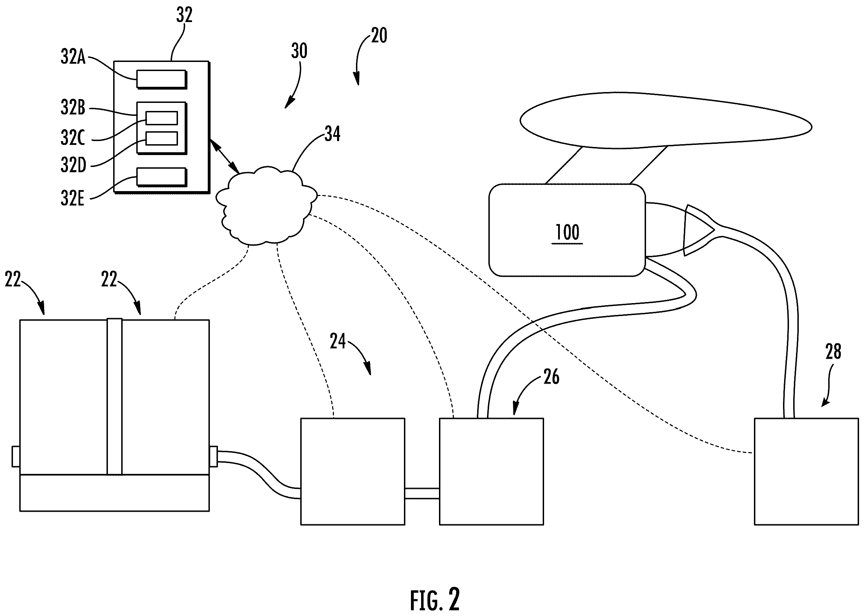

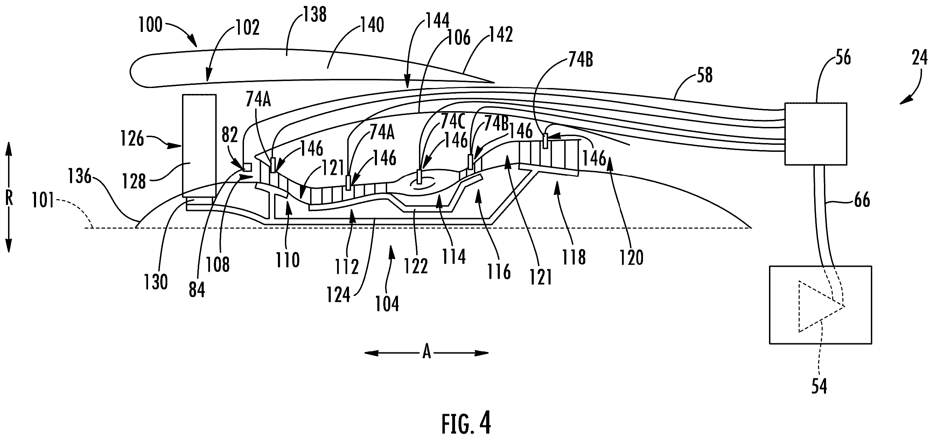

Referring now to the drawings, wherein identical numerals indicate the same elements throughout the figures, FIG. 1 provides a modular foam cart 10 according to an exemplary embodiment of the present subject matter. As described in detail below, modular foam cart 10 may be configured for housing some or all components of a cleaning system 20 (which will be described in more detail below in reference to FIG. 2). Cleaning system 20 is generally configured for washing, rinsing, or otherwise cleaning a gas turbine engine, such as a turbofan gas turbine engine (e.g., turbofan 100; see FIG. 4). Additionally, or alternatively, however, the cleaning system 20 may be utilized with any other suitable gas turbine engine, such as a turboprop engine, a turboshaft engine, turbojet engine, etc. Moreover, it should be appreciated that aspects of cleaning system 20 described herein could be performed without modular foam cart 10, e.g., using a stationary cleaning system.

According to the exemplary illustrated embodiment, cleaning system 20 is configured as a modular system that is housed at least in part on or within modular foam cart 10. As illustrated, modular foam cart includes a support frame 12 mounted on a plurality of wheels 14 to improve the mobility of the cart and facilitate quick and easy cleaning of turbofan 100. In addition, modular foam cart 10 may include a pivoting tug bar 16 such that modular foam cart 10 may be towed by a vehicle to a desired location proximate to turbofan 100. In addition, modular foam cart 10 can contain various storage compartments 18 for storing all equipment necessary for cleaning turbofan 100 and other features for facilitating the quick and easy cleaning of turbofan 100.

Referring now to FIG. 2, cleaning system 20 in accordance with an exemplary embodiment of the present disclosure will be described. More specifically, FIG. 2 provides a schematic view of cleaning system 20 and its various cleaning modules in accordance with an exemplary embodiment of the present disclosure. For example, cleaning system 20 generally includes one or more tank modules 22, a wash module 24, a foam supply unit 26, and a collection module 28. In general, as will be described in detail below, tank modules 22 store and/or heat wash fluid, wash module 24 receives and pressurizes the wash fluid (e.g., using any suitable combination or pumps, valves, flow regulation devices, and/or plumbing), foam supply unit 26 processes the wash liquid to form cleaning foam, and collection module 28 collects and/or recycles waste wash fluid.

In general, foam supply unit 26 is configured for receiving a flow of wash fluid (e.g., from tank module 22). In addition, foam supply unit 26 is configured for receiving a stream of air and for generating a flow of foamed wash fluid. In this regard, a pump of wash module 24 may urge the flow of wash fluid along with a stream of air (e.g., from an external pump or air compressor). Foam supply unit 26 is generally configured for mixing the flow of wash fluid and the stream of air to aerate the wash fluid and generate the flow of foamed wash fluid.

In this regard, for example, the flow of foamed wash fluid includes wash fluid with a desired foam density, or the ratio of air to fluid. The foam characteristics may be manipulated by adjusting a temperature or a flow rate of either the flow of wash fluid or the stream of air into the foam supply unit 26. Alternatively, mechanical means may be used to agitate the flow of wash fluid and generate more bubbles and thus lower foam density. For example, according to an exemplary embodiment, a foaming or aeration system may include three porous aeration devices through which the flow of wash fluid is passed. The porous aeration devices are fluidly coupled in series such that the flow of wash fluid passes successively through each aeration device and the bubble size is progressively refined and/or decreased. It should be appreciated that other aeration devices and configurations are possible and within the scope of the present subject matter.

Each of the various modules are, for the embodiment depicted, operably connected to a control system 30. The control system 30 may include one or more computing device(s) 32. The computing device(s) 32 may include one or more processor(s) 32A and one or more memory device(s) 32B. The one or more processor(s) 32A may include any suitable processing device, such as a microprocessor, microcontroller, integrated circuit, logic device, or other suitable processing device. The one or more memory device(s) 32B may include one or more computer-readable media, including, but not limited to, non-transitory computer-readable media, RAM, ROM, hard drives, flash drives, or other memory devices.

The one or more memory device(s) 32B may store information accessible by the one or more processor(s) 32A, including computer-readable instructions 32C that can be executed by the one or more processor(s) 32A. The instructions 32C can be any set of instructions that when executed by the one or more processor(s) 32A, cause the one or more processor(s) 32A to perform operations. The instructions 32C may be software written in any suitable programming language or can be implemented in hardware. In some embodiments, the instructions 32C may be executed by the one or more processor(s) 32A to cause the one or more processor(s) 32A to perform operations, such as the washing operations of a gas turbine engine, as described herein, and/or any other operations or functions of the one or more computing device(s) 32. Additionally, and/or alternatively, the instructions 32C may be executed in logically and/or virtually separate threads on processor 32A. The memory device(s) 32B can further store data 32D that can be accessed by the processors 32A.

The computing device(s) 32 can also include a communications interface 32E used to communicate, for example, with the other components of cleaning system 20. The communications interface 32E may include any suitable components for interfacing with one more communications network(s), including for example, transmitters, receivers, ports, controllers, antennas, or other suitable components. Control system 30 may also be communication (e.g., via communications interface 32E) with the various modules 22, 24, 26, 28, described below, and may selectively operate the cleaning system 20 in response to user input and feedback from these modules 22, 24, 26, 28. More specifically, for the embodiment depicted, the control system 30 is configured to communicate through a wireless communication network 34 through communications interface 32E, such that the control system 30 may send or receive information and/or commands to or from the various modules 22, 24, 26, 28 of the exemplary cleaning system 20 wirelessly. It should be appreciated, however, that in other embodiments, the control system 30 may additionally, or alternatively, use a wired communication bus to communicate with various modules 22, 24, 26, 28.

The technology discussed herein makes reference to computer-based systems and actions taken by and information sent to and from computer-based systems. It should be appreciated that the inherent flexibility of computer-based systems allows for a great variety of possible configurations, combinations, and divisions of tasks and functionality between and among components. For instance, processes discussed herein can be implemented using a single computing device or multiple computing devices working in combination. Databases, memory, instructions, and applications can be implemented on a single system or distributed across multiple systems. Distributed components can operate sequentially or in parallel. For example, although the exemplary control system 30 is depicted as including a separate computing device 32, in certain embodiments, the computing device 32 may be included within, e.g., one or more of the modules 22, 24, 26, 28, an onboard computing device of an aircraft, a controller of a gas turbine engine, etc.

It should be appreciated that modular foam cart 10 and cleaning system 20 as described herein may allow for a more versatile cleaning system for a gas turbine engine, such as turbofan 100. For example, utilizing tank modules that are interchangeable with a wash module and/or a foam wash module may allow for extended washing operations, without having to refill a wash tank and wait for the wash liquid in such wash tank to heat up to a desired temperature. Instead, once all of a wash liquid within a given tank module has been utilized by the cleaning system, a second tank module may be fluidly connected to the wash module to allow for the washing operations to continue with minimal interruption. Similarly, utilizing a wash module that is interchangeable with, e.g. a foam wash module may allow for multiple wash operations to be completed on a given gas turbine engine without requiring two completely separate cleaning systems. In addition, according to exemplary embodiments of the present subject matter, a power module could be configured for providing compressed air and/or electrical power, e.g., when cleaning system 20 is used in a location where such facilities are inconvenient or unavailable.

Additionally, as stated, the exemplary cleaning system may be controlled through a control system in communications with a wireless network. Accordingly, the control system may be operably connected to the various modules through a wireless communication network, and further, may receive control signals/commands through a wireless communication network. Such a configuration may allow for an operator located remotely from the cleaning system, such as an operator within a cockpit of an aircraft, to wirelessly control certain aspects of the cleaning system.

It should be appreciated, that as used herein the term "fluid," "wash fluid," "wash liquid," and the like may refer to any suitable fluid for performing washing operations and/or rinsing the gas turbine engine. Such wash fluid is typically made up of water that may include other additives such as detergent or other treatments. For example, the wash fluid may refer to water, or a combination of water and detergent, soap, and/or other additives. Moreover, cleaning system 20 is not limited to utilizing water or any particular detergent as a wash fluid. Instead, cleaning system 20 may utilize any suitable wash liquid for performing desired washing operations of the gas turbine engine.

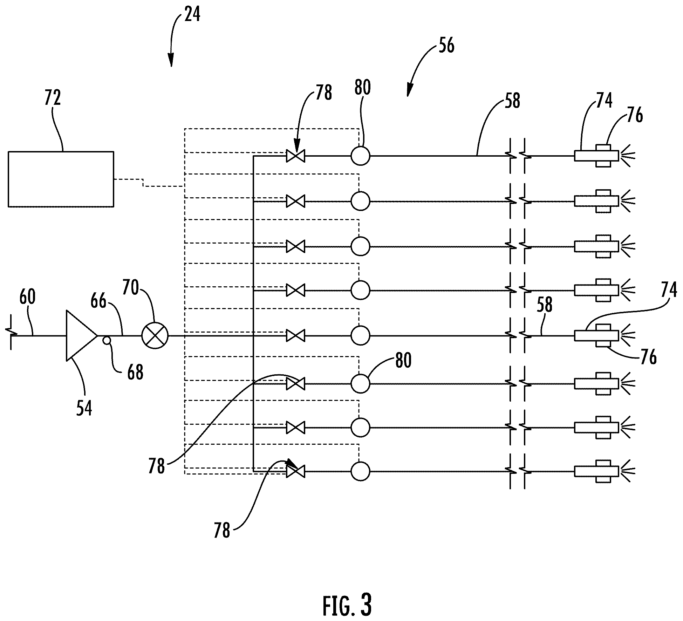

Referring now particularly to FIG. 3, wash module 24 will be described according to an exemplary embodiment of the present subject matter. More specifically, FIG. 3 provides a schematic view of the wash module 24 in accordance with an exemplary aspect of the present disclosure. The exemplary wash module 24 of FIG. 3 may, in certain exemplary embodiments, be utilized with the exemplary cleaning system 20 described above with reference to FIG. 1. However, it should be appreciated, that in other embodiments the wash module 24 described with reference to FIG. 3 may instead be utilized with any other suitable cleaning system 20, such as a single, integrated cleaning system.

As illustrated, the wash module 24 generally includes a pump 54, and distribution manifold 56, and a plurality of wash lines 58. More specifically, the pump 54 is configured to receive a flow of wash liquid and pressurize the flow of wash liquid. The pump 54 is configured to be releasably fluidly connected to an outlet of a wash tank module 22. For example, for the embodiment depicted, the wash module 24 includes a fluid connection line 60, with the fluid connection line 60 configured to be releasably fluidly connected to an outlet of wash tank module 22, e.g., through a quick release connection.

Although not depicted, the pump 54 may include a variable frequency drive motor, such that it may operate at various power levels. However, in other embodiments, any other suitable pump may be utilized, including any other suitable type of motor (such as a constant frequency motor). Additionally, the pump 54 is electrically connected to a power source, which may be a battery, or any other suitable power source. The power source may provide the pump 54 with a necessary amount of electrical power to pressurize the wash liquid received to a desired pressure.

An outlet of the pump 54 is fluidly connected to a duct 66 extending to the distribution manifold 56, such that the distribution manifold 56 is fluidly connected to the pump 54 for receiving a flow of pressurized wash liquid from the pump 54. For the embodiment depicted in FIG. 3, upstream of the distribution manifold 56, the wash module 24 includes a sensor 68 for, e.g., sensing a temperature and or pressure, and a valve 70. The valve 70, for the embodiment depicted, is positioned in the duct 66 and movable between an open position allowing full flow of wash liquid through the duct 66 and a closed position, preventing any flow of wash liquid through the duct 66. In certain exemplary embodiments, the valve 70 may be a variable throughput valve movable between various positions between the open position and the closed position to allow a desired amount of wash liquid through the duct 66.

Referring still to FIG. 3, for the embodiment depicted, the distribution manifold 56 is configured to receive a flow of wash liquid from the duct 66 (i.e., a flow of pressurized wash liquid from the pump 54), and distribute such flow of wash liquid to the plurality of wash lines 58. The distribution manifold 56 may be operably connected to a controller 72 of the wash module 24 (e.g., such as computing device 32). Notably, the controller 72 may further be operably connected to various other components of the wash module 24. Specifically, for the embodiment depicted, the controller 72 is operably connected to the power source, the pump 54, the sensor 68, and the valve 70, in addition to the distribution manifold 56. The controller 72 may be configured similar to the computing device 32 of the control system 30 and may be in communication with the control system 30 of the cleaning system 20 through, e.g., a wireless communication network 34. For example, as will be described in greater detail below, the controller 72 may be configured to control a flow of pressurized wash liquid to the plurality of wash lines 58 through the distribution manifold 56.

Moreover, as is depicted, the plurality of wash lines 58 are fluidly connected to the distribution manifold 56 for receiving at least a portion of the pressurized wash liquid therefrom. Although for the embodiment depicted, the distribution manifold 56 is fluidly connected to eight (8) wash lines 58, in other embodiments, the wash module 24 of the cleaning system 20 may instead include any other suitable number of wash lines 58 fluidly connected to the distribution manifold 56. As will be appreciated from the description below, the distribution manifold 56 may be configured, in certain embodiments, to distribute the flow of pressurized wash liquid in a fixed manner. For example, the distribution manifold 56 may be configured to split the flow of pressurized wash liquid substantially evenly between each of the plurality of wash lines 58 fluidly connected thereto. Alternatively, the distribution manifold 56 may be configured to split the flow of pressurized wash liquid in an uneven manner between the plurality of wash lines 58 fluidly connected thereto (i.e., distributing more wash liquid to certain wash lines 58 than others). In still other exemplary embodiments, the distribution manifold 56 may be configured to vary a distribution of the flow of the pressurized wash liquid between the various wash lines 58 according to, e.g., individual spray schedules for the various wash lines 58.

For example, referring now to FIGS. 3 and 4, the exemplary distribution manifold 56 is fluidly connected to the pump 54 of the wash module 24 via a duct 66. Additionally, as is discussed in greater detail below, the wash module 24 further includes a plurality of spray nozzles 74, with each spray nozzle 74 attached to a respective wash line 58. Each of the plurality of spray nozzles 74 includes an attachment portion 76 for attachment to a respective borescope hole in a gas turbine engine, providing a substantially air-tight and water-tight connection to a borescope hole (see, e.g., borescope hole 146 in FIG. 4).

Furthermore, the exemplary distribution manifold 56 is configured to vary a distribution of the flow of pressurized wash liquid between the various wash lines 58. Specifically, the distribution manifold 56 includes a plurality of valves 78, with each of the plurality of valves 78 fluidly connecting a respective wash line 58 to the pump 54. Each of the valves 78 may be a variable throughput valve movable between a fully open position allowing complete flow of pressurized wash liquid therethrough, a fully closed position allowing no flow of pressurized liquid therethrough, as well as a variety of positions therebetween. For example, one or more of the variable throughput valves 78 may be configured as solenoid valves, or solenoid activated valves, or alternatively as ratio regulation valves.

Moreover, for the embodiment depicted each of the plurality of valves 78 is individually operably connected to the controller 72, such that the plurality of valves 78 are operable independently of one another. Accordingly, the controller 72 may control the plurality of valves 78 such that each operates according to its own unique flow schedule (e.g., flow rate, pressure, duration, etc.).

In addition to the plurality of valves 78, the distribution manifold 56 further includes a plurality of flow meters 80, wherein each flow meter 80 is in fluid communication with a wash line 58 of the plurality of wash lines 58 to measure a flowrate of the pressurized wash liquid flowing therethrough. More specifically, for the embodiment depicted, the distribution manifold 56 includes a flow meter 80 downstream from each of the valves 78, for measuring a flowrate of wash liquid flowing to (and through) each wash line 58. However, in other embodiments, one or more of the flow meters 80 may instead be positioned upstream of a respective valve 78, or at any other suitable location.

As with the plurality of valves 78, each of the flow meters 80 is operably connected to the controller 72, such that the controller 72 may receive information indicative of a flowrate of wash liquid through each wash line 58 from the respective flow meters 80. The controller 72 may utilize such information in controlling one or more of the plurality of valves 78. For example, the controller 72 may operate on a feedback loop to ensure wash liquid is flowing to and through a particular wash line 58 at a desired flow rate.

Referring now to FIG. 4, the exemplary wash module 24 is illustrated as being used in washing operations of a gas turbine engine, also depicted schematically. The exemplary gas turbine engine depicted is configured as a high bypass turbofan engine, referred to herein as gas turbine engine 100 or turbofan 100. As is depicted, the exemplary turbofan 100 defines an axial direction A (extending parallel to a longitudinal centerline 101 provided for reference), a radial direction R, and a circumferential direction C (extending about the axial direction A). Additionally, the turbofan 100 includes a fan section 102 and a turbine engine 104 disposed downstream from the fan section 102. The exemplary turbine engine 104 depicted generally includes a substantially tubular outer casing 106 that defines an annular booster inlet 108. The outer casing 106 encases, in serial flow relationship, a compressor section including a second, booster or low pressure (LP) compressor 110 and a first, high pressure (HP) compressor 112; a combustor section 114; a turbine section including a first, high pressure (HP) turbine 116 and a second, low pressure (LP) turbine 118; and a jet exhaust nozzle section 120. The compressor section, combustor section 114, and turbine section together define a core air flowpath 121 extending from the annular booster inlet 108 through the LP compressor 110, HP compressor 112, combustor section 114, HP turbine 116 section 116, LP turbine section 118 and jet nozzle exhaust section 120. A first, high pressure (HP) shaft or spool 122 drivingly connects the HP turbine 116 to the HP compressor 112. A second, low pressure (LP) shaft or spool 124 drivingly connects the LP turbine 118 to the LP compressor 110.

For the embodiment depicted, the fan section 102 includes a fan 126 having a plurality of fan blades 128 coupled to a disk 130 in a spaced apart manner. As depicted, the fan blades 128 extend outwardly from disk 130 generally along the radial direction R. In certain exemplary aspects, the fan 126 may be a variable pitch fan, such that each of the plurality of fan blades 128 are rotatable relative to the disk about a pitch axis, by virtue of the plurality of fan blades being operatively coupled to an actuation member.

Referring still to the exemplary embodiment of FIG. 4, the disk 130 is covered by rotatable front hub 136 aerodynamically contoured to promote an airflow through the plurality of fan blades 128. Additionally, the exemplary fan section 102 includes an annular fan casing or outer nacelle 138 that circumferentially surrounds the fan 126 and/or at least a portion of the turbine engine 104. The nacelle 138 is supported relative to the turbine engine 104 by a plurality of circumferentially-spaced outlet guide vanes 140. A downstream section 142 of the nacelle 138 extends over an outer portion of the turbine engine 104 so as to define a bypass airflow passage 144 therebetween.

Referring still to FIG. 4, the fan blades 128, disk 130, and front hub 136 are together rotatable about the longitudinal axis 101 directly by the LP spool 124. Accordingly, for the embodiment depicted, the turbofan engine 100 may be referred to as a "direct drive" turbofan engine. However, in other embodiments, the turbofan engine 100 may additionally include a reduction gearbox for driving the fan 126 at a reduced rotational speed relative to the LP spool 124.

Throughout the turbofan engine 100, the turbine engine 104 defines a plurality of borescope holes 146. Specifically, for the embodiment depicted, the turbine engine 104 includes one or more borescope holes 146 defined in the compressor section, in the combustor section 114, and in the turbine section. More specifically, still, for the embodiment depicted, the turbine engine 104 includes one or more borescope holes 146 defined in the LP compressor 110, the HP compressor 112, a combustion chamber of the combustor section 114, the HP turbine 116, and the LP turbine 118. The borescope holes 146 may allow for inspection of the turbine engine 104 between operations, and more specifically, may open into the core air flowpath 121 of the turbofan engine 100 to allow for inspection of, e.g., one or more blades, nozzles, or combustion liners of the turbofan engine 100 between operations. By contrast, during normal operations, the borescope holes 146 within the combustor section 114 and turbine section may be plugged with a borescope plug (not shown), such that the borescope holes 146 do not affect operation of the turbofan engine 100.

Moreover, as previously stated, the exemplary turbofan engine 100 is depicted schematically as being cleaned by the wash module 24 of the cleaning system 20. More specifically, the wash module 24 of the cleaning system 20 further includes a plurality of spray nozzles 74, each of the plurality of spray nozzles 74 attached to a respective wash line 58 and configured for extending at least partially into or through one of the borescope holes 146 of the turbofan engine 100 for providing at least a portion of the flow of the pressurized wash liquid to the turbofan engine 100. More specifically, the plurality of spray nozzles 74 may provide at least a portion of the flow of pressurized wash liquid directly to the core air flowpath 121 of the turbine engine 104, at a location downstream from the booster inlet 108. It should be appreciated, that in certain embodiments, the plurality of spray nozzles 74 may extend at least partially into or through borescope holes 146 of the turbofan engine 100 at locations spaced along, e.g., the circumferential direction C of the turbofan engine 100. Such a configuration may allow for a more even cleaning of the turbofan engine 100, or rather of the turbine engine 104, during such wash operations.

Referring still to FIG. 4, for the embodiment depicted, the plurality spray nozzles 74 includes a compressor spray nozzle 74A for extending at least partially into or through one of the borescope holes 146 defined in the compressor section of the turbofan engine 100, as well as a turbine spray nozzle 74B for extending at least partially into or through one of the borescope holes 146 defined in the turbine section of the turbofan engine 100. Further, for the embodiment depicted, the plurality spray nozzles 74 includes a combustor section spray nozzle 74C for extending at least partially into or through one of the borescope holes 146 defined in a combustion chamber of the combustor section 114 of the gas turbine engine.

More specifically, for the embodiment depicted, the compressor spray nozzle 74A includes a plurality of compressor spray nozzles 74A (a first plurality of spray nozzles 74 positioned within borescope holes 146 in a first region of the turbofan engine 100), with at least one spray nozzle 74A extending into or through a borescope hole 146 defined in the LP compressor 110 and at least one spray nozzle 74A extending into or through a borescope hole 146 defined in the HP compressor 112. Further, for the embodiment depicted, the turbine spray nozzle 74B includes a plurality of turbine spray nozzles 74B (a second plurality of spray nozzles 74 positioned within borescope holes 146 in a second region of the turbofan engine 100), with at least one spray nozzle 74B extending into or through a borescope hole 146 defined in the HP turbine 116 and at least one spray nozzle 74B extending into or through a borescope hole 146 defined in the LP turbine 118.

Additionally, the exemplary wash module 24 further includes an inlet nozzle assembly 82 fluidly connected to one or more of the plurality of wash lines 58 for providing at least a portion of the flow of pressurized wash liquid to the turbofan engine 100, or rather to the turbine engine 104, through the booster inlet 108 of the turbine engine 104. As is depicted, the inlet nozzle assembly 82 includes one or more inlet nozzles 84 positioned proximate the booster inlet 108 to the turbine engine 104 to spray wash liquid directly into and through the booster inlet 108 of the turbine engine 104. In other exemplary embodiments, however, the inlet nozzle assembly 82 may instead be located at least partially forward of the fan 126.

Referring still to FIG. 4, as noted above, the exemplary turbofan engine 100 includes the outer nacelle 138 which defines the bypass passage 144 with the turbine engine 104. For the embodiment depicted, the plurality of wash lines 58 extend from an aft end of the turbine engine 104 to each of the respective plurality of borescope holes 146. With such a configuration, the cleaning system 20 may operate without having to remove one or more portions of the fan section 102. More specifically, a cleaning system having such a configuration may allow for conducting washing operations (i.e., providing pressurized wash liquid through the plurality of wash lines and wash nozzles), while allowing for the turbofan engine to be cranked or rotated using, e.g., a starter motor or turning tool, to increase in effectiveness of the washing operations. In addition, a controller, such as a system controller or computing device 32, can automatically control the speed of the engine core rotation to improve cleaning performance or to prevent unwanted wash fluid intrusion into internal engine air circuits or other passageways. Moreover, such a controller can be configured for monitoring motor torque, e.g., to protect gearbox components.

Utilizing a cleaning system in accordance with one or more of the exemplary embodiments described herein may allow for more efficient cleaning of the gas turbine engine. More specifically, by providing a wash liquid directly to a core air flowpath of the turbine engine of the gas turbine engine may allow the cleaning system to provide such portions with heated and pressurized wash liquid. By contrast to prior configurations, in which wash liquid is provided solely at an inlet to the turbine engine (in which case such wash liquid may be neither pressurized nor heated by the time it reaches e.g., a turbine section), providing wash liquid directly to e.g., a turbine section of the turbine engine may allow the cleaning system to provide heated and pressurized wash liquid to such section. Additionally, embodiments including the individual valves fluidly connecting wash lines to a pump in a distribution manifold may allow for relatively precise cleaning of the gas turbine engine and/or targeted cleaning of a gas turbine engine. Moreover, the duration of the cleaning cycle may be adjusted, the density of the cleansing foam may be altered, and other adjustments to the cleaning cycle may be adjusted to improve cleaning efficiency.

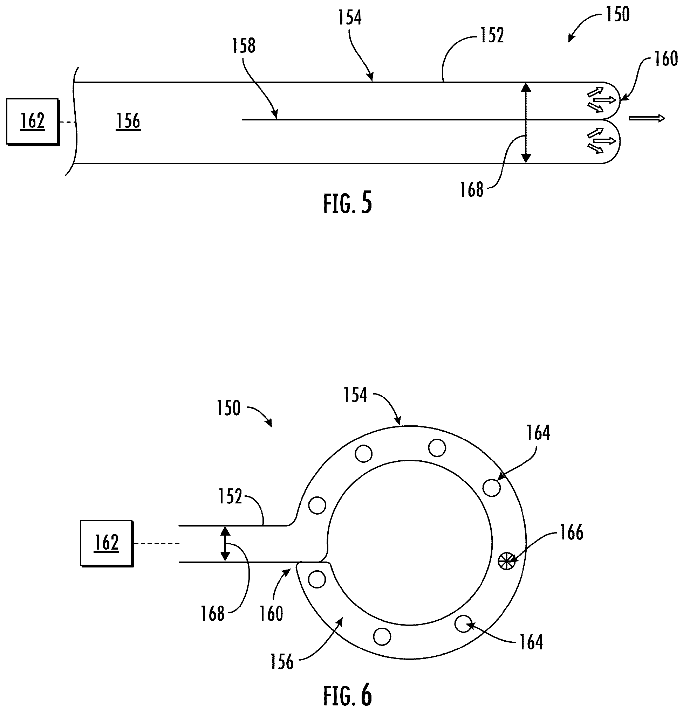

As described above, the flow of wash fluid may be supplied into desired locations of gas turbine engine using a plurality of discrete wash lines 58, e.g., through borescope holes 146. However, cleaning system 20 may use alternative means for supplying the flow of wash fluid. Specifically, referring now for example to FIGS. 5 and 6, an everting tube 150 may be used to precisely supply cleaning foam to target locations within gas turbine engine 100. In this regard, everting tubes are generally continuous elongate tubes that are everted as internal pressure is used to drive a length of the tube forward while the outer surface of the tube remains stationary relative to the environment.

In this regard, as illustrated, everting tube 150 includes a flexible membrane 152 (e.g., a tube, balloon, etc.) having an outer surface 154 that defines an inner passageway 156 and an inner surface 158 that is joined to outer surface 154 at a distal end 160 of everting tube 150. Everting tube 150 may be extended by everting inner surface 158 out of inner passageway 156, such that it wraps around and extends distal end 160, i.e., such that it becomes an extension of outer surface 154. By contrast, everting tube 150 may be shortened by pulling inner surface 158 back into inner passageway 156.

Everting tube 150 may be extended or retracted by adjusting the pressure within inner passageway 156. In this regard, cleaning system 20 may include a pressure supply 162 for pressurizing inner passageway 156, where the applied pressure everts inner surface 158 of flexible membrane 152 to extend everting tube 150. For example, pressure supply 162 may be controlled by control system 30, controller 72, or any other suitable computing device. According to an example embodiment, the pressure supply 162 regulates pressure using cleaning foam, i.e., by regulating a flow rate of cleaning foam into inner passageway 156 of everting tube 150. However, it should be appreciated that the pressure may be regulated in other manners as well, e.g., using pneumatics, hydraulics, etc. Accordingly, as explained herein, inner surface 158 of everting tube 150 may be extended as internal pressure acts all over the inside of everting tube 150, thereby positioning everting tube 150 in desired locations within gas turbine engine 100.

In addition, everting tube 150 may include one or more orifices or apertures 164 (e.g., defined through flexible membrane 152) for discharging the flow of cleaning foam into gas turbine engine 100. In this regard, apertures 164 may be defined at precise locations on everting tube 150 for precisely dispensing foam at desired locations. For example, apertures 164 may be sized and positioned to discharge cleaning foam at distal end 160 when everting tube 150 is in a fully extended position, at circumferentially spaced locations around the annulus of core air flow path 121, or at booster inlet 108. According to example embodiments, one or more everting tubes 150 may be sealed (e.g., absent of apertures 164), which may be useful block a space or passageway within an engine and better regulate the flow of cleaning foam.

Notably, it may be desirable to have everting tube 150 generally sealed during the deployment, but where apertures 164 may be opened when everting tube 150 is in the desired position. According to an example embodiment, apertures 164 may be opened utilizing a pressure change within inner passageway 156, e.g., by using pressure-operated flaps or pressure-operated irises 166, shown schematically for example in FIG. 6. According to other example embodiments, temperature change may be used to open apertures 164, e.g., such that flaps are held closed at low temperature by a wax sealant. After the tube is deployed, fluid temperature or engine temperature can melt the wax sealant to open the flaps. Alternatively, the flaps themselves can be made of a wax (or equivalent) capable of being melted. In addition, for example, flaps may be dissolvable such that they are held closed by a water or foam-soluble adhesive, or the flaps can be made of a soluble material.

Everting tube 150 or flexible membrane 152 may be sized to follow a predetermined path as it is extended or retracted, e.g., by adjusting the dimensions of flexible membrane 152. This may be achieved by adjusting the original manufactured shape of flexible membrane 152, or by locally reducing the length of a part of outer surface 154. For example, as illustrated in FIG. 5, everting tube 150 may be designed as a straight tube that extends in a single direction. By contrast, everting tube 150 may be configured to form a nonlinear shape when in an extended position, e.g., such that it may be fed through nonlinear passageways within gas turbine engine 100. For example, referring specifically to FIG. 6, everting tube 150 may form an annular shape when in an extended position. In addition, apertures 164 may be spaced around the annular portion of everting tube 150, e.g., such that everting tube 150 may wrap around core air flow path 121 and dispense cleaning foam evenly within gas turbine engine 100. In addition, according to an example embodiment, a diameter 168 of outer surface 154 may be equal to or greater than an insertion point (e.g., such as borescope holes 146) of gas turbine engine 100.

According to an example embodiment, multiple everting tubes 150 may be used simultaneously to cleaning gas turbine engine 100. For example, a first everting tube 150 may have a first annulus that is deployed around a circumference of the engine in front of the booster, e.g., at booster inlet 108. The annulus may wrap all around the circumference and may be fed from a trunk shown extending from the rear of gas turbine engine 100. Alternatively, everting tube 150 may be fed from a front of gas turbine engine 100, e.g., through blades 128 of fan 126. A second everting tube 150 may be deployed around an internal circumference of the compressor case, e.g., between the blades and vanes of one of the first compressor stages of the gas turbine engine 100. Removal or extraction of everting tube 150 may involve simply pulling everting tube 150 out of the engine, e.g., if the environment doesn't present snagging risks or high friction. Alternatively, it may be desirable to reverse the original deployment, e.g. by pulling a line attached to the end of everting tube to pull the distal end of the tube back within the tube or by regulating the pressure in inner passageway 156 using pressure supply 162.

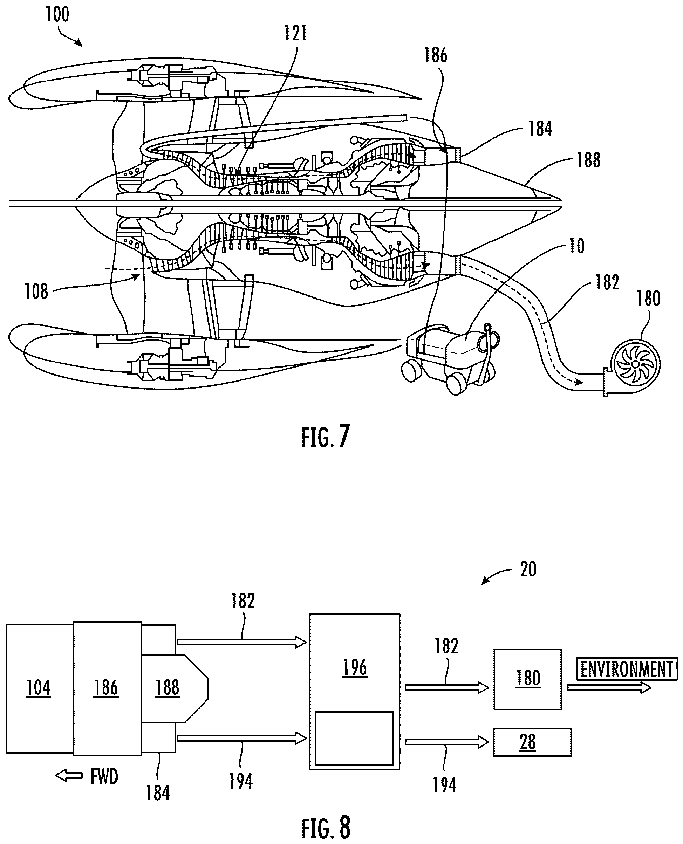

Still other methods of injecting cleaning foam into gas turbine engine 100 are possible and within the scope of the present subject matter. For example, referring to FIG. 7, cleaning system 20 may utilize a J-hook supply arm 170 for supplying the cleaning foam into gas turbine engine 100. For example, as illustrated, J-hook supply arm 170 may be fluidly coupled to foam supply unit 26 (e.g., via distribution manifold 56) and may reach from a rear of gas turbine engine 100, e.g., to supply cleaning foam directly into booster inlet 108 of gas turbine engine 100. It should be appreciated that multiple J-hook supply arms 170 may be used to direct cleaning foam to any suitable location within gas turbine engine 100.

Notably, it may be desirable to rotate gas turbine engine 100 during a cleaning process. In this regard, rotation at relatively slow speeds may serve to distribute cleaning foam, agitate deposits, and generally improve the cleaning process. Conventional means for rotating the engine during a cleaning process include utilizing a turning motor that may be attached to the engine, the accessory gear box, or may otherwise be configured for rotating the engine. However, installation of the turning motor requires additional components and adds a substantial amount of time to the cleaning process.

In addition, it may be desirable to collect cleaning foam that is discharged from gas turbine engine 100 after a cleaning process. In this regard, conventional collection of used foam utilizes an apron (e.g., a large tarp) positioned under the engine to collect foam and wash fluid after it passes from turbofan engine 100. Wash fluid collected in the apron may be returned to collection module 28 for discharge, filtering, and/or reuse. However, the apron might be ineffective at catching all of the cleaning foam and requires excessive time to properly set up.

Accordingly, aspects of the present subject matter are directed to systems and methods for turning gas turbine engine 100 during the cleaning process while also efficiently collecting cleaning foam. Referring for example now to FIGS. 7 through 9, collection module 28 will be described according to an exemplary embodiment of the present subject matter. It should be appreciated that collection module 28 as described with reference to FIGS. 7 through 9 may be utilized with cleaning system 20 or any other suitable cleaning system.

As illustrated, cleaning system 20 may include an air blower 180 that is operably coupled to a core flowpath 121 of gas turbine engine 100. In general, air blower 180 may be configured to draw a flow of air (e.g., identified in FIG. 8 by reference numeral 182) through the core flowpath 121 at a flow rate that induces rotation of gas turbine engine 100. According to the illustrated embodiment, air blower 180 is located aft of the engine and draws air through the engine. However, it should be appreciated that air blower 180 may alternatively be positioned forward of the engine or at any other suitable location for drawing air therethrough. For example, air blower 180 may be controlled by control system 30, controller 72, or any other suitable computing device.

Air blower 180 may operate to draw air at a flow rate that ramps the engine up to a target rotational speed, e.g., a predetermined engine speed that facilitates effective cleaning of the engine. For example, the target rotational speed may refer to the core speed (e.g., the rotational speed of core turbine engine 204). The target rotational speed may vary depending on the cleaning agents used, the stage of the cleaning process, and other variables associated with the cleaning process. For example, the target rotational speed may be temporarily reduced to facilitate and engine soak, may be increased to raise the temperature of the cleaning foam, etc. According to an example embodiment, the target rotational speed may be between about 10 and 1500 revolutions per minute (RPM), between about 50 and 1000 revolutions per minute (RPM), between about 60 and 500 RPM, between about 70 and 300 RPM, or about 200 RPM. Other target rotational speeds are possible and within the scope of the present subject matter.

It should be appreciated that foam supply unit 26 may be configured to supply cleaning foam into the engine continuously or in stages. In addition, the foam injection rate, detergent characteristics, and other foam quality characteristics may vary depending on the phase of the cleaning cycle, the target rotational speed, and other cleaning factors. According to an example embodiment, foam supply unit 26 injects the cleaning foam into gas turbine engine 100 when the target rotational speed is reached. In an embodiment, after the foam supply unit 26 injects the cleaning foam into the gas turbine engine 100, the air blower 180 is stopped and the gas turbine engine 100 is allowed to ramp down to a stop. In a further embodiment, the foam is allowed to remain in the engine for a period of about 3-5 minutes, about 5-10 minutes, or about 10-30 minutes, before the air blower 180 is restarted, drawing foam out of the gas turbine engine 100 and air through the gas turbine engine 100 to cause the gas turbine engine 100 to ramp up to the target rotational speed. Thereafter, a combination of some or all of the aforementioned steps is repeated. In one embodiment the number of repetitions may be predetermined while in other embodiments the steps may be repeated until a foam effluent measurement meets a predefined criterion indicating sufficient cleaning of the gas turbine engine 100 has been achieved.

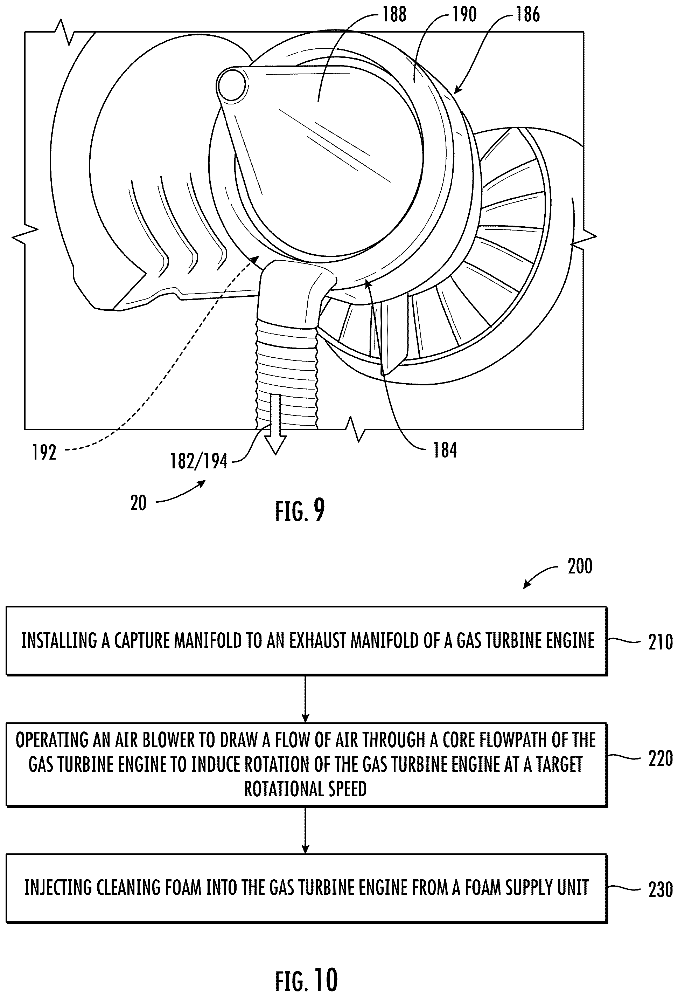

As illustrated, air blower 180 may be fluidly coupled to gas turbine engine 100 using a capture manifold 184. For example, capture manifold 184 is illustrated schematically in FIG. 8 and from a perspective view in FIG. 9 as being fluidly coupled to an exhaust manifold 186 of gas turbine engine (e.g., at jet exhaust section 120 or at the outlet of core air flow path 121). Specifically, as illustrated, capture manifold 184 is annular and wraps around an exhaust cone 188 of gas turbine engine 100. Capture manifold 184 may include an intake duct 190 that defines an intake plenum 192 for sucking air 182 through gas turbine engine 100, thereby inducing engine rotation while drawing air 182 and cleaning foam (e.g., identified by reference numeral 194 in FIG. 8) out of gas turbine engine 100. As shown, air blower 180 is positioned downstream of capture manifold 184 for drawing air 182 therethrough. As illustrated in FIG. 8, cleaning system 20 may include an air/foam separator 196 and an effluent capture tank (e.g., such as collection module 28) for collecting used cleaning foam 194 after it is separated from the flow of air 182.

Referring now to FIG. 10, a method 200 for washing a turbine engine is provided according to an exemplary embodiment of the present subject matter. In at least certain exemplary aspects, the method 200 may be utilized with one or more of modular foam cart 10, cleaning system 20, and/or wash module 24 described above with reference to FIGS. 1 through 9. For example, one or more of these steps may be performed by control system 30, controller 72, or any other suitable computing device. Moreover, in certain exemplary aspects, the method 200 may be utilized for washing a turbine engine configured in a manner similar to the exemplary turbofan 100 and turbine engine 104 described above. Accordingly, the turbine engine may include a compressor section, a combustor section, and a turbine section. Further, the turbine engine may define a plurality of borescope holes located within one or more of the compressor section, combustor section, and turbine section.

Method 200 includes, at step 210, installing a capture manifold over an exhaust manifold of the gas turbine engine. As described above, an air blower may be fluidly coupled to capture manifold for drawing air therethrough. Specifically, step 220 may include operating the air blower to draw a flow of air through a core flowpath of the gas turbine engine to induce rotation of the gas turbine engine at a target rotational speed. Step 230 includes injecting cleaning foam into the gas turbine engine from a foam supply unit.

As explained above, the foam supply unit may inject cleaning foam into the gas turbine engine when the target rotational speed is reached. In addition, the cleaning foam may be injected using any suitable means. For example, step 230 of injecting cleaning foam may include inserting an everting tube into a borescope inspection port of the gas turbine engine and supplying the cleaning foam into the gas turbine engine through the everting tube. In addition, or alternatively, step 230 of injecting cleaning foam may include connecting a plurality of discrete supply lines to a plurality of borescope inspection ports of the gas turbine engine and supplying the cleaning foam into the gas turbine engine through the plurality of discrete supply lines. Other suitable means for supplying foam are possible and within the scope of the present subject matter.

FIG. 10 depicts steps performed in a particular order for purposes of illustration and discussion. Those of ordinary skill in the art, using the disclosures provided herein, will understand that the steps of any of the methods discussed herein can be adapted, rearranged, expanded, omitted, or modified in various ways without deviating from the scope of the present disclosure. Moreover, although aspects of method 200 are explained using gas turbine engine 100 and cleaning system 20 as an example, it should be appreciated that this method may be applied to the cleaning of any suitable engine using any suitable wash system.

Further aspects are provided by the subject matter of the following clauses:
A cleaning system for a gas turbine engine, the cleaning system comprising: a foam supply unit for generating cleaning foam that is injected into the gas turbine engine; and an air blower that is operably coupled to a core flowpath of the gas turbine engine, the air blower being configured to draw a flow of air through the core flowpath at a flow rate that induces rotation of the gas turbine engine at a target rotational speed.

The cleaning system of any preceding clause, further comprising: a capture manifold mounted to an exhaust of the gas turbine engine.

The cleaning system of any preceding clause, wherein the air blower is positioned downstream of the capture manifold.

The cleaning system of any preceding clause, wherein the capture manifold is annular and is positioned around an exhaust cone of the gas turbine engine.

The cleaning system of any preceding clause, wherein the target rotational speed when only the flow of air is passing through the core flowpath is between about 10 and 1500 revolutions per minute.

The cleaning system of any preceding clause, wherein the target rotational speed when only the flow of air is passing through the core flowpath is between about 70 and 300 revolutions per minute.

The cleaning system of any preceding clause, wherein the foam supply unit injects the cleaning foam into the gas turbine engine when the target rotational speed is reached.

The cleaning system of any preceding clause, wherein the foam supply unit further comprises: one or more everting tubes for supplying the cleaning foam into the gas turbine engine; and a pressure supply for pressurizing and extending the one or more everting tubes.

The cleaning system of any preceding clause, wherein the one or more everting tubes are positioned at a booster inlet of the gas turbine engine and are configured to extend through the booster inlet.

The cleaning system of any preceding clause, wherein the one or more everting tubes comprise a flexible membrane having an outer surface that defines an inner passageway and an inner surface that is joined to the outer surface at a distal end of the one or more everting tubes, and wherein the inner surface everts around the distal end to extend the outer surface and lengthen the one or more everting tubes.

The cleaning system of any preceding clause, wherein the flexible membrane has one or more apertures for discharging the cleaning foam.

The cleaning system of any preceding clause, wherein the one or more everting tubes are configured to form an annular shape when in an extended position.

The cleaning system of any preceding clause, wherein the foam supply unit further comprises: a plurality of discrete supply lines, each of the plurality of discrete supply lines being fluidly coupled to one of a plurality of borescope inspection ports of the gas turbine engine.

The cleaning system of any preceding clause, wherein the foam supply unit further comprises: a J-hook supply arm for supplying the cleaning foam into a booster inlet of the gas turbine engine.

A method for cleaning a gas turbine engine, the method comprising: operating an air blower to draw a flow of air through a core flowpath of the gas turbine engine to induce rotation of the gas turbine engine at a target rotational speed; and injecting cleaning foam into the gas turbine engine from a foam supply unit.

The method of any preceding clause, wherein the foam supply unit injects cleaning foam into the gas turbine engine when the target rotational speed is reached.

The method of any preceding clause, wherein the target rotational speed when only the flow of air is passing through the core flowpath is between about 70 and 300 revolutions per minute.

The method of any preceding clause, wherein injecting the cleaning foam into the gas turbine engine comprises: inserting one or more everting tubes into one or more openings of the gas turbine engine; and supplying the cleaning foam into the gas turbine engine through the everting tube.

The method of any preceding clause, further comprising: installing a capture manifold over an exhaust of the gas turbine engine prior to operating the air blower.

The method of any preceding clause, wherein injecting the cleaning foam into the gas turbine engine from the foam supply unit comprises: installing a J-hook supply arm for supplying the cleaning foam into a booster inlet of the gas turbine engine.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A cleaning system (20) for a gas turbine engine (100), the cleaning system (20) comprising:
a foam supply unit (26) for generating cleaning foam (194) that is injected into the gas turbine engine (100); and
an air blower (180) that is operably coupled to a core flowpath (121) of the gas turbine engine (100), the air blower (180) being configured to draw a flow of air (182) through the core flowpath (121) at a flow rate that induces rotation of the gas turbine engine (100) at a target rotational speed.

2. The cleaning system (20) of claim 1, further comprising:
a capture manifold (184) mounted to an exhaust (186) of the gas turbine engine (100).

3. The cleaning system (20) of claim 2, wherein the air blower (180) is positioned downstream of the capture manifold (184).

4. The cleaning system (20) of claim 2, wherein the capture manifold (184) is annular and is positioned around an exhaust (186) cone of the gas turbine engine (100).

5. The cleaning system (20) of any preceding claim, wherein the target rotational speed when only the flow of air (182) is passing through the core flowpath (121) is between about 10 and 1500 revolutions per minute.

6. The cleaning system (20) of claim 5, wherein the target rotational speed when only the flow of air (182) is passing through the core flowpath (121) is between about 70 and 300 revolutions per minute.

7. The cleaning system (20) of any preceding claim, wherein the foam supply unit (26) injects the cleaning foam (194) into the gas turbine engine (100) when the target rotational speed is reached.

8. The cleaning system (20) of any preceding claim, wherein the foam supply unit (26) further comprises:
one or more everting tubes (150) for supplying the cleaning foam (194) into the gas turbine engine (100); and
a pressure supply for pressurizing and extending the one or more everting tubes (150).

9. The cleaning system (20) of claim 8, wherein the one or more everting tubes (150) are positioned at a booster inlet (108) of the gas turbine engine (100) and are configured to extend through the booster inlet (108).

10. The cleaning system (20) of claim 8, wherein the one or more everting tubes (150) comprise a flexible membrane (152) having an outer surface (154) that defines an inner passageway (156) and an inner surface (158) that is joined to the outer surface (154) at a distal end (160) of the one or more everting tubes (150), and wherein the inner surface (158) everts around the distal end (160) to extend the outer surface (154) and lengthen the one or more everting tubes (150).

11. The cleaning system (20) of claim 10, wherein the flexible membrane (152) has one or more apertures (164) for discharging the cleaning foam (194).

12. The cleaning system (20) of claim 8, wherein the one or more everting tubes (150) are configured to form an annular shape when in an extended position.

13. The cleaning system (20) of any preceding claim, wherein the foam supply unit (26) further comprises:
a plurality of discrete supply lines (58), each of the plurality of discrete supply lines (58) being fluidly coupled to one of a plurality of borescope inspection ports (146) of the gas turbine engine (100).

14. The cleaning system (20) of any preceding claim, wherein the foam supply unit (26) further comprises:
a J-hook supply arm (170) for supplying the cleaning foam (194) into a booster inlet (108) of the gas turbine engine (100).

15. A method (200) for cleaning a gas turbine engine (100), the method (200) comprising:
operating an air blower (180) to draw a flow of air (182) through a core flowpath (121) of the gas turbine engine (100) to induce rotation of the gas turbine engine (100) at a target rotational speed; and
injecting cleaning foam (194) into the gas turbine engine (100) from a foam supply unit (26).
